# EUROPÄISCHE PATENTSCHRIFT

(11) **EP 0 817 524 B1**
(45) Veröffentlichungstag und Bekanntmachung des Hinweises auf die Patenterteilung: **13.05.2009**
(21) Anmeldenummer: 97109588.0
(22) Anmeldetag: 12.06.1997
(51) Int. Cl.: H04Q 11/04, H04M 3/24

(54) **Verfahren zum Übertragen von Informationssignalen in einem Teilnehmeranschlussnetzwerk**
Method for transmitting information signals in a subscriber's network connection
Méthode pour la transmission de signaux d'information dans le raccordement au réseau d'un abonné

(30) Priorität: 25.06.1996 DE 19625385
(43) Veröffentlichungstag der Anmeldung: 07.01.1998
(73) Patentinhaber: Nokia Siemens Networks GmbH & Co. KG, 81541 München (DE)
(72) Erfinder: Stein, Karl-Ulrich, Dr., 82008 Unterhaching (DE)

(56) Entgegenhaltungen:
- WO-A-96/19089
- DE-C- 4 343 982
- US-A- 5 023 869

## Beschreibung

Die Erfindung betrifft ein Verfahren gemäß dem Oberbegriff des Patentanspruchs 1.

In der Regel verfügen Telekommunikationsnetze im Teilnehmeranschlußbereich über ein Teilnehmeranschlußnetzwerk, das ein oder mehrere Vermittlungsstellen (Ortsvermittlungsstellen) mit einer Mehrzahl von Teilnehmern bzw. deren Endgeräten verbindet. Die beiden Enden der jeweiligen Teilnehmeranschlußleitung werden in der Ortsvermittlungsstelle über eine vermittlungsseitige Endeinrichtung und teilnehmerseitig über eine Netzabschlußeinrichtung abgeschlossen.

Weltweit werden Telekommunikationsnetze seit geraumer Zeit in digitaler Technik ausgebaut. Dabei wird angestrebt, die bereits existierenden Teilnehmeranschlußnetzwerke für die Übertragung digitaler Informationssignale zu nutzen. Dies ist insofern ein wesentlicher Gesichtspunkt, als daß die Teilnehmeranschlußnetzwerke bereits flächendeckend als Zweidraht- oder Koaxialanschlußleitungen vorhanden sind und somit keine neuen Leitungen wie beispielsweise Glasfaser installiert zu werden brauchen, womit in der Praxis ein erheblicher wirtschaftlicher Vorteil verbunden ist.

Zwar wurden diese bereits existierenden Teilnehmeranschlußnetzwerke ursprünglich zur Übertragung niederfrequenter Informationssignale wie beispielsweise beim analogen Fernsprechen oder bei der Verwendung von Schmalbanddiensten konzipiert. Trotz dieser ursprünglichen Konzeption eignen sie sich aber auch für die Übertragung breitbandigerer Dienste. So haben sich in den letzten Jahren Verfahren durchgesetzt, mit denen die vorhandenen Kupferleitungen im Teilnehmeranschlußnetzwerk für die Übertragung von digitalen Informationssignalen genutzt werden können. Hierzu zählen beispielsweise das ADSL (Asymmetrical Digital Subscriber Line) - und HDSL (High-Bit Rate Digital Subscriber Line) - Übertragungsverfahren.

Die im Teilnehmeranschlußnetzwerk übertragene Bitrate ist typischerweise mit 2 x 64 kbit/s derart festgelegt (2B - Kanäle), daß die längsten vorkommenden Anschlußleitungen noch genutzt werden können. Damit bleibt aber ein großer Teil der maximal möglichen Bitrate im Teilnehmeranschlußnetzwerk bei kürzeren Anschlußleitungen ungenutzt. Dies hat seinen Grund darin, daß das die Reichweite der Digital-Signal-Übertragung begrenzende Dämpfungsmaß der symetrischen Doppeladern von Kupferanschlußleitungen mit der Leitungslänge zwischen Ortsvermittlungsstelle und Teilnehmer zunimmt. Generell gilt, je kürzer die Länge einer Teilnehmeranschlußleitung umso höher kann die darüber zu übertragende Bitrate sein. Zur Illustration sei beispielhaft eine Teilnehmeranschlußleitung von 8km Länge angenommen. Diese soll die längste Leitung im Teilnehmeranschlußnetzwerk sein. Beim Stand der Technik ist die Übertragungskapazität (2B+D) festgelegt und die Kabel werden so eingesetzt, daß bei dieser längsten Leitung (8 KM) im Teilnehmeranschlußnetzwerk ein einwandfreier Betrieb möglich ist. Dies gilt auch für die kürzeren Teilnehmeranschlußleitungen. Diese könnten, da sie zum Teil erheblich kürzerer als 8 Km sind, also eine sehr viel höhere Bitrate übertragen.

Diese für alle Teilnehmer im Teilnehmeranschlußbereich zur Verfügung stehenden festen Bitraten haben somit den Nachteil, daß sie abhängig von der längsten Teilnehmeranschlußleitung festgelegt werden. Daher können die für eine Übertragung von Informationssignalen breitbandigerer Dienste geeigneten kürzeren Teilnehmeranschlußleitungen im Teilnehmeranschlußnetzwerk nicht voll ausgenutzt werden.

Aus der deutschen Patentschrift DE 43 43 982 ist ein Anschlußleitungsnetz mit Teilnehmeranschlußleitungen zur Übertragung von digitalen Informationssignalen bekannt. Darin wird offenbart, wie die maximal mögliche Bitrate pro Übertragungsleitung festgelegt werden kann. Dazu wird von einem Bitmustergenerator in der Ortsvermittlungsstelle Bitmuster über die Teilnehmeranschlußleitung gesendet, die beim Teilnehmer gespiegelt und wieder zurückgesendet werden. In der Vermittlungsstelle erfolgt dann die Auswertung der erhaltenen Bitmuster. In Abhängigkeit der Ergebnisse wird dann die maximal mögliche Bitrate festgelegt. Nachteilig an einer derartigen Vorgehensweise ist jedoch, daß eine solche Lösung sehr spezifisch ist, und somit nicht überall im Teilnehmeranschlußnetzwerk verwendet werden kann.

Weiterhin ist in US 5,023,869 ein Verfahren zur Bestimmung der maximal möglichen Übertragungsrate über eine die Verbindung zwischen zwei ISDN-Kommunikationseinrichtungen realisierende Teilnehmeranschlußleitung beschrieben. Dabei werden Testsignale über die Teilnehmeranschlußleitung ausgesendet und in Abhängigkeit von der Empfangsqualität des ausgesendeten Testsignals die maximal mögliche Übertragungsrate für die Informationsübermittlung zwischen den beiden ISDN-Kommunikationseinrichtungen festgelegt.

Der Erfindung liegt die Aufgabe zugrunde, einen Weg aufzuzeigen, wie die Teilnehmeranschlußleitungen eines Teilnehmeranschlußnetzwerkes optimal zur Übertragung von digitalen Informationssignalen genutzt werden können.

Die Erfindung wird ausgehend vom Oberbegriff des Patentanspruchs 1 durch dessen kennzeichnende Merkmale gelöst.

Vorteilhaft für die Erfindung ist insbesondere, das adaptive individuelle Einstellen der vermittlungsseitigen und teilnehmerseitigen Einrichtungen an die tatsächliche, maximal mögliche Übertragungskapazität einer jeden Teilnehmeranschlußleitung. Damit ist der Vorteil einer optimierten Übertragung von digitalen Informationssignalen über eine jede dieser Teilnehmeranschlußleitungen gegeben.

Vorteilhafte Ausgestaltungen sind in den Unteransprüchen angegeben.

**Gemäß Anspruch 2 ist vorgesehen, dass das Codierverfahren als Basisbandverfahren oder als Modulationsverfahren ausgestaltet ist.**

Gemäß **Anspruch 3** ist vorgesehen, daß nach Maßgabe der Meßergebnisse die maximale Bitrate festgelegt wird und entsprechende Einstellungen in der vermittlungsseitigen Einrichtung und der teilnehmerseitigen Einrichtung vorgenommen werden. Damit ist der Vorteil verbunden, daß das Übertragungsverfahren und die Bitrate leitungsindividuell in Abhängigkeit von den physikalischen Übertragungsparametern adaptiv vorgenommen werden können.

Gemäß **Anspruch 4** ist vorgesehen, daß während der Zeiten, in denen der D-Kanal ungenutzt ist, dieser Kanal in einer Schleife für die Bitfehlermessung genutzt wird. Damit ist der Vorteil verbunden, daß der D-Kanal ebenfalls besser ausgenutzt wird.

**Gemäß Anspruch 5 ist vorgesehen, daß die Informationen mit einer Bitrate von Nx64K + 16K oder Nx64K übertragen werden, wobei vorzugsweise Codes geringer Bandbreite verwendet werden.** Damit wird das vorhandene Ortnetz einschließlich der Vermittlungseinrichtung für Dienste mit Nx64K nutzbar. Dienste dieser Art decken - modernste Videokompression deren Weiterentwicklung eingeschlossen - die meisten der derart bekannten Multimedia-Applikationen ab. Die Möglichkeit Nx64K zum Teilnehmer zu übertragen, ist vom Netzbetreiber als Dienstangebot an den Teilnehmer zu nutzen, wobei dieser Teilnehmer dann je nach der Preis Gebrauch machen kann.

Gemäß **Anspruch 6** ist vorgesehen, daß die Architektur der Einrichtungen in der Ortsvermittlungsstelle und beim Teilnehmer derart ausgebildet ist, daß ein Mikrocomputer Verwendung findet. Damit ist der Vorteil verbunden, daß beispielsweise in der Software abgelegte länderspezifische Verfahren jederzeit in gegebenfalls modifizierter Form nachgeladen werden können.

Gemäß Anspruch 6 ist vorgesehen, daß die Messungen und Einstellungen gegebenenfalls in einem vorgegebenen Zeitraster wiederholt werden. Damit ist der Vorteil verbunden, daß eventuell veränderte Verbindungsparameter auf der Teilnehmeranschlußleitung zu neuen Einstellungen führen. Weitere vorteilhafte Weiterbildungen sind in den Unteransprüchen 7, 8, 9, 10 angegeben.

Die Erfindung wird im folgenden anhand eines Ausführungsbeispiels, das in einer Figur dargestellt ist, näher erläutert.

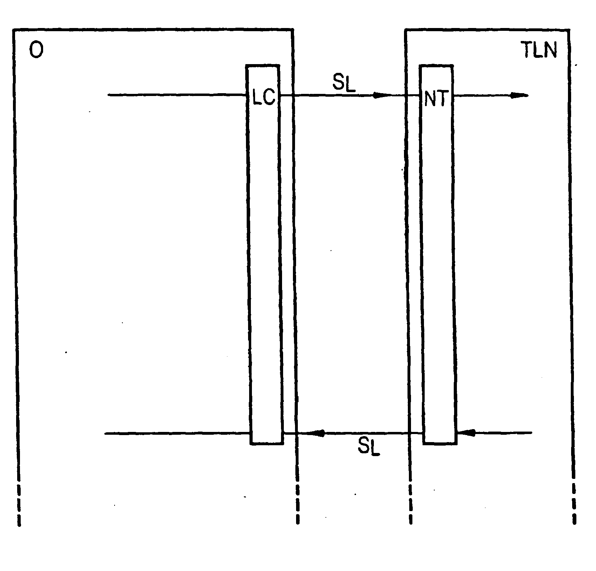

Danach ist gemäß dieser Figur eine Konfiguration aufgezeigt; auf der das erfindungsgemäße Verfahren zum Ablauf gelangt. In der in Frage kommenden Ortsvermittlungsstelle O bzw. einem hier nicht näher spezifizierten Teilnehmeranschlußkonzentrator ist eine vermittlungsseitige Einrichtung LC aufgezeigt (Linecard). Sie bildet den vermittlungsseitigen Abschluß der Teilnehmeranschlußleitung SL. Der teilnehmerseitige Abschluß der Teilnehmeranschlußleitung SL wird von der Einrichtung NT gebildet. Dabei handelt es sich um die Netzabschlußeinrichtung, die bei einem jeden Teilnehmers TLN vorhanden ist. Beispielhaft ist in der Figur lediglich ein Netzabschluß NT eines Teilnehmers aufgezeigt. Die Teilnehmeranschlußleitung SL führt somit die Einrichtungen NT aller an der Ortsvermittlungsstelle O angeschlossenen Teilnehmer mit der vermittlungsseitigen Endeinrichtung LC zusammen. Die Summe aller Teilnehmeranschlußleitungen SL bilden dabei das Teilnehmeranschlußnetzwerk. Die Teilnehmeranschlußleitung SL soll im vorliegendem Ausführungsbeispiel aus einer symmetrischen Zweidrahtanschlußleitung oder einer Koaxialanschlußleitung bestehen.

Die Abschlußeinrichtungen LC, NT der Teilnehmeranschlußleitung SL verfügen je nach Übertragungsrichtung über Multiplex- oder Demultiplexeinrichtungen, über Einrichtungen zur Taktversorgung, sowie zur Synchronisation des Übertragungsrahmens für die Digitalsignale und über weitere Einrichtungen, die für die Digitalsignalübertragung abhängig vom jeweiligen Übertragungsverfahren erforderlich sind. Darüber hinaus sind in den Abschlußeinrichtungen Sende- oder Empfangseinrichtungen für die uni- oder bidirektionale Übertragung der Digitalsignale zugehöriger Übertragungsbitrate über die jeweilige Teilnehmeranschlußleitung SL vorgesehen.

Erfindungsgemäß werden nun bei der Erstinstallation die Übertragungs- und Störeigenschaften der Teilnehmeranschlußleitung SL vermessen. Beispielhaft für die Messung wird die Dämpfung der in Frage kommenden einzelnen Teilnehmeranschlußleitung SL gemessen. Ebenso können weitere Parameter ermittelt werden. So wird z.B. das (wesentlich schwieriger zu messende) Nahnebensprechen einer Tabelle entnommen. Es kann ferner aus Referenzangaben über die für die Teilnehmeranschlußleitung verwendeten Kabel oder aus für das entsprechende Kabelbündel durchgeführte Referenzmessungen ermittelt werden. Nach Maßgabe des Meßergebnisses wird nun ein Übertragungsverfahren für N x 64K plus 16K (2B + D) und/oder eine höhere Bitrate festgelegt und hierzu die Linecard in entsprechender Weise eingestellt (N>2). Dies erfolgt, indem aus den (analogen) Messungen z. B. eine Grenzfrequenz ermittelt wird, bei der die Leitungsdämpfung in etwa der Nahnebensprechdämpfung entspricht. Analog zu dieser Grenzfrequenz wird je nach gewählter Kanalcodierung die maximale Bitrate festgelegt. Die Kanalkodierung kann für verschiedene Bitratenbereiche unterschiedlich sein. Weiterhin werden als Übertragungsverfahren für N x 64K vorzugsweise Codierungen geringer Bandbreite verwendet (beispielsweise im Basisband 2B1Q oder mit einem Träger QAM16, wobei 8 Bit in zwei Zeitschritten übertragen würden).

Bei einer späteren Überprüfungsinstallation werden gegebenenfalls erneut die Übertragungs- und Störeigenschaften der Leitung vermessen und gegebenfalls neue Einstellungen vorgenommen.Die Erhöhung der Bitrate erfolgt durch Erhöhung der Taktfrequenz und gegebenenfalls auch des Trägers. Dabei sind derartige adaptive Verfahren dadurch einsetzbar, daß bei hohen Stückzahlen bei den hier auftretenden Frequenzen eine Integration im Silizium extrem kostengünstig ist. Wenn der Bitfehler eine bestimmte Größe überschreitet, kann so die bisher eingestellte Bitrate um eine Stufe reduziert werden. Ist für eine längere Zeitperiode kein Fehler aufgetreten, so kann gegebenenfalls die bisher eingestellte Bitrate um eine Stufe erhöht werden.

In den meisten Fällen wird während des Betriebes der D-Kanal nicht genutzt. Insofern kann zur Ermittelung der maximalen Bitrate in diesen Zeiten der D-Kanal in einer Schleife für eine Bitfehlermessung genutzt werden. Weiterhin können die auf einer Zweidrahtleitung erforderlichen Echosperren auch bei höheren Bitraten in der bisherigen Form ausgebildet sein. Für Verfahren mit Trägerfrequenzen eignen sich ebenso verschiedene Träger für die beiden Übertragungsrichtungen, um Effekte von Echo und Nebensprechen zu unterdrücken.

Als Chip-Architektur für die Implementierung des Verfahrens sowohl in der Linecard wie beim Teilnehmer eignet sich ein aus VHDL abgeleitetes Design. Besonders vorteilhaft an der erfindungsgemäßen Vorgehensweise ist, daß ein Mikrocomputer als Steuervorrichtung verwendet wird. Dieser dient im wesentlichen dazu, länderspezifische Eigenheiten (zum Beispiel im Hinblick auf das Teilnehmeranschlußnetzwerk), in Firmware oder Software zu implementieren. Dabei kann die Software auch im Zuge einer Weiterentwicklung nachgeladen werden. Alternativ ist ein Signalprozessor (DSP) mit seinen analogen Zusatzfunktionen verwendbar. Werden neben dem Mikrocomputer auf dem Chip noch DSP Einrichtungen verwendet, so ist nicht nur die Adaption sondern auch die Modulation in einem gewissen Umfang softwarespezifisch gestaltbar.

Der Vorteil der Verwendung eines N x 64K Verfahrens auf den Teilnehmeranschlußleitungen, den Anschlußeinrichtungen sowie in der ersten Vermittlungsebene besteht darin, daß über diese Einrichtungen Multimediadienste adaptiv mit der zur Verfügung stehenden Leitungskapazität den einzelnen Teilnehmern angeboten werden können. Darüber hinaus hat der Betreiber die Möglichkeit, durch zusätzlich eingefügte Regeneratoren Kunden in bestimmten Bereichen nach Bedarf ein verbessertes Angebot zu anzubieten.

Im Kernnetz selbst bietet sich die Möglichkeit an, Dienste (zum Beispiel Intelligente Netze) unterstützt mit N x 64K bis zu den Servern hin zu unterstützen. Eine Alternative dazu stellt der Übergang auf ATM (Asynchronous Transfer Modus) nach der ersten Vermittlungsebene dar. Diese Lösung ist dann insbesondere vorzuziehen, wenn es sich um einen optimierten Anschluß an ein zukünftiges multimediafähiges Internet bzw. Postinternet handelt.

Weiterhin ist die Gesamtarchitektur der für das erfindungsgemäße adaptive Verfahren relevanten Hard - und Softwarekomponenten derart auszulegen, daß im Falle eines Fehlversagens eine ISDN BA und/oder eine analoge Anschlußfunktion sichergestellt ist.

Weiterhin sind in den teilnehmerseitigen Einrichtungen NT und komplementär dazu beim Übergang von Nx64K in einen einheit lichen Bitstrom für den Fall, daß die Vermittlungseinrichtung keine Bitsequenz bei der Benutzung von Nx64K gewährleistet, in Einrichtungen wie beispielsweise einer ATM Interworking Unit weitere Maßnahmen zur weiteren Optimierung der Übertragung von digitalen Informationssignalen zu treffen. Dazu gehört z.B. ein Startprotokoll für eine Kanalnummerierung zwischen Vermittlungseinrichtung und Teilnehmer sowie Zwischenspeicher mit Sequenzkorrekturen am empfangenden Ende.

## Patentansprüche

1. Verfahren zum Übertragen von Informationssignalen in einem Teilnehmeranschlußnetzwerk, mit vermittlungsseitigen Einrichtungen (LC) einer Ortsvermittlungsstelle (O) sowie teilnehmerseitigen Einrichtungen (NT), die jeweils vor oder in dem Endgerät eines Teilnehmers (TLN) angeordnet sind, und mit Teilnehmeranschlußleitungen (SL), die jeweils die vermittlungsseitige und teilnehmerseitige Einrichtungen (LC, NT) zusammenführen,
**dadurch gekennzeichnet,**
**daß** Übertragungsparameter der Teilnehmeranschlußleitung (SL) gemessen und nach Maßgabe der Meßergebnisse eine Kanalkodierung für ein Übertragungsverfahren für Nx64K + 16K oder Nx64K festgelegt wird und entsprechende Einstellungen in der vermittlungsseitigen Einrichtung (LC) und der teilnehmerseitigen Einrichtung (NT) vorgenommen werden.

2. Verfahren nach Anspruch 1,
**dadurch gekennzeichnet,**
**daß** das Codierverfahren als Basisbandverfahren oder als Modulationsverfahren ausgestaltet ist.

3. Verfahren nach Anspruch 1 oder 2,
**dadurch gekennzeichnet,**
**daß** nach Maßgabe der Meßergebnisse die maximale Bitrate festgelegt wird und entsprechende Einstellungen in der vermittlungsseitigen Einrichtung (LC) und der teilnehmerseitigen Einrichtung (NT) vorgenommen werden.

4. Verfahren nach einen der vorherigen Ansprüche,
**dadurch gekennzeichnet,**
**daß** während der Zeiten, in denen der D-Kanal ungenutzt ist, dieser Kanal in einer Schleife für die Bitfehlermessung genutzt wird.

5. Verfahren nach einen der Ansprüche 1 bis 4,
**dadurch gekennzeichnet,**
**daß** die Informationen mit einer Bitrate von Nx64K + 16K oder Nx64K übertragen werden, wobei vorzugsweise Codierverfahren geringer Bandbreite verwendet werden.

6. Verfahren nach einem der vorstehenden Ansprüche,
**dadurch gekennzeichnet,**
**daß** die Architektur der Einrichtungen in der Ortsvermittlungsstelle und beim Teilnehmer derart ausgebildet ist, daß ein Mikrocomputer Verwendung findet.

7. Verfahren nach einem der vorstehenden Ansprüche,
**dadurch gekennzeichnet,**
**daß** die Messungen und Einstellungen gegebenenfalls in einem vorgegebenen Zeitraster wiederholt werden.

8. Verfahren nach einem der vorstehenden Ansprüche,
**dadurch gekennzeichnet,**
**daß** die Einstellungen nach dem Auftreten von Bitfehlern über eine festgelegte Grenze neu festgelegt werden.

9. Verfahren nach einem der vorstehenden Ansprüche,
**dadurch gekennzeichnet,**
**daß** die Architektur der Einstellungen in der Ortsvermittlungsstelle und beim Teilnehmer derart ausgebildet sind, daß sie vom Mikrocomputer gesteuert verschiedene Übertragungungsverfahren einstellen können.

10. Verfahren nach einem der vorstehenden Ansprüche,
**dadurch gekennzeichnet,**
**daß** wenigstens Teile der Übertragungsverfahren per Software im Mikrocomputer einstellbar sind.

11. Verfahren nach einem der vorstehenden Ansprüche,
**dadurch gekennzeichnet,**
**daß** die Software von bzw. über die Ortsvermittlungsstelle nachladbar ist.

12. Kommunikationsanordnung zum Übertragen von Informationssignalen in einem Teilnehmeranschlussnetzwerk, mit vermittlungsseitigen Einrichtungen (LC) einer Ortsvermittlungsstelle (O) sowie teilnehmerseitigen Einrichtungen (NT), die jeweils vor oder in dem Endgerät eines Teilnehmers (TLN) angeordnet sind, und mit Teilnehmeranschlußleitungen (SL), die jeweils die vermittlungsseitige und teilnehmerseitige Einrichtungen (LC, NT) zusammenführen,
**dadurch gekennzeichnet,**
**daß** Erfassungsmittel (LC, NT) vorgesehen sind, durch welche Übertragungsparameter der Teilnehmeranschlußleitung (SL) gemessen werden,
**daß** Einstellungsmittel (LC, NT) vorgesehen sind durch welche nach Maßgabe der Meßergebnisse eine Kanalcodierung für ein Übertragungsverfahren für Nx64K + 16K oder Nx64K festgelegt wird und entsprechende Einstellungen in der vermittlungsseitigen Einrichtung (LC) und der teilnehmerseitigen Einrichtung (NT) vorgenommen werden.

## Claims

1. Method for transmitting information signals in a subscriber line network, comprising devices (LC) at the exchange end of a local exchange (O) and devices (NT) at the subscriber end which are in each case arranged before or in the terminal of a subscriber (TLN), and comprising subscriber lines (SL) which in each case connect the devices (LC, NT) at the exchange end and at the subscriber end, **characterized in that** transmission parameters of the subscriber line (SL) are measured and in accordance with the determination of the measurement results a channel coding is established for a transmission method for Nx64K + 16K or Nx64K and corresponding adjustments are performed in the device (LC) at the exchange end and in the device (NT) at the subscriber end.

2. Method according to Claim 1, **characterized in that** the coding method is designed as a base band method or as a modulation method.

3. Method according to Claim 1 or 2, **characterized in that** in accordance with the determination of the measurement results, the maximum bit rate is established and corresponding adjustments are performed in the device (LC) at the exchange end and the device (NT) at the subscriber end.

4. Method according to one of the preceding claims, **characterized in that** during the times in which the D channel is unused, this channel is used in a loop for the bit error measurement.

5. Method according to one of Claims 1 to 4, **characterized in that** the information is transmitted with a bit rate of Nx64K + 16K or Nx64K, wherein coding methods of little bandwidth are preferably used.

6. Method according to one of the preceding claims, **characterized in that** the architecture of the devices in the local exchange and at the subscriber is designed in such a manner that a microcomputer is used.

7. Method according to one of the preceding claims, **characterized in that** the measurements and adjustments are repeated within a predetermined timing pattern, if necessary.

8. Method according to one of the preceding claims, **characterized in that** the adjustments are re-established after bit errors have occurred above a fixed limit.

9. Method according to one of the preceding claims, **characterized in that** the architecture of the adjustments in the local exchange and at the subscriber are designed in such a manner that they can adjust various transmission methods controlled by the microcomputer.

10. Method according to one of the preceding claims, **characterized in that** at least parts of the transmission methods can be adjusted by software in the microcomputer.

11. Method according to one of the preceding claims, **characterized in that** the software can be reloaded by or via the local exchange, respectively.

12. Communication arrangement for transmitting information signals in a subscriber line network comprising devices (LC) at the exchange end of a local exchange (O) and devices (NT) at the subscriber end which are in each case arranged before or in the terminal of a subscriber (TLN), and comprising subscriber lines (SL) which in each case connect the devices (LC, NT) at the exchange end and at the subscriber end, **characterized in that** detection means (LC, NT) by means of which transmission parameters of the subscriber line (SL) are measured are provided,
**in that** adjusting means (LC, NT) are provided by means of which a channel coding for a transmission method for Nx64K + 16K or Nx64K is established as determined by the measurement results and corresponding adjustments are carried out in the device (LC) at the exchange end and the device (NT) at the subscriber end.

## Revendications

1. Procédé de transmission de signaux d'information dans un réseau de raccordement d'abonnés, avec des dispositifs (LC) d'un centre de commutation local (O) côté commutation ainsi que des dispositifs (NT) côté abonnés, lesquels sont respectivement situés devant ou dans le terminal d'un abonné (TLN), et avec des lignes de raccordement d'abonnés (SL) qui réunissent respectivement les dispositifs côté commutation et côté abonnés (LC, NT),
**caractérisé en ce que**
des paramètres de transmission de la ligne de raccordement d'abonnés (SL) sont mesurés et, conformément aux résultats des mesures, un codage de canal est déterminé pour un procédé de transmission pour Nx64K + 16K ou Nx64K et des réglages correspondants sont effectués dans le dispositif côté commutation (LC) et le dispositif côté abonné (NT).

2. Procédé selon la revendication 1,
**caractérisé en ce que**
le procédé de codage se présente sous la forme d'un procédé par bande de base ou sous la forme d'un procédé par modulation.

3. Procédé selon la revendication 1 ou 2,
**caractérisé en ce que**
le débit binaire maximal est déterminé conformément aux résultats des mesures et des réglages correspondants sont effectués dans le dispositif côté commutation (LC) et le dispositif côté abonné (NT).

4. Procédé selon l'une des revendications précédentes,
**caractérisé en ce que**
le canal D, pendant les temps durant lesquels il n'est pas utilisé, est utilisé dans une boucle de mesure d'erreurs de bits.

5. Procédé selon l'une des revendications 1 à 4,
**caractérisé en ce que**
les informations sont transmises avec un débit binaire de Nx64K + 16K ou de Nx64K, des procédés de codage à faible largeur de bande étant utilisés préférentiellement.

6. Procédé selon l'une des revendications précédentes,
**caractérisé en ce que**
l'architecture des dispositifs se présente sous une forme telle, dans le centre de commutation local et chez l'abonné, qu'un micro-ordinateur trouve usage.

7. Procédé selon l'une des revendications précédentes,
**caractérisé en ce que**
les mesures et réglages sont, le cas échéant, répétés dans une trame temporelle prédéterminée.

8. Procédé selon l'une des revendications précédentes,
**caractérisé en ce que**
les réglages sont redéterminés après la survenance d'erreurs de bits au-delà d'une limite déterminée.

9. Procédé selon l'une des revendications précédentes,
**caractérisé en ce que**
l'architecture des réglages se présente sous une forme telle, dans le centre de commutation local et chez l'abonné, qu'elle peut, sous la commande du micro-ordinateur, régler différents procédés de transmission.

10. Procédé selon l'une des revendications précédentes,
**caractérisé en ce que**
au moins des parties des procédés de transmission sont réglables par logiciel dans le micro-ordinateur.

11. Procédé selon l'une des revendications précédentes,
**caractérisé en ce que**
le logiciel est rechargeable par resp. via le centre de commutation local.

12. Dispositif de communication pour la transmission de signaux d'information dans un réseau de raccordement d'abonnés, avec des dispositifs (LC) d'un centre de commutation local (O) côté commutation ainsi que des dispositifs (NT) côté abonnés, lesquels sont respectivement situés devant ou dans le terminal d'un abonné (TLN), et avec des lignes de raccordement d'abonnés (SL) qui réunissent respectivement les dispositifs côté commutation et côté abonnés (LC, NT),
**caractérisé en ce que**
sont prévus des moyens de détection (LC, NT) qui permettent de mesurer des paramètres de transmission de la ligne de raccordement d'abonné (SL),
sont prévus des moyens de réglage (LC, NT) qui permettent de déterminer, conformément aux résultats des mesures, un codage de canal pour un procédé de transmission pour Nx64K + 16K ou Nx64K et d'effectuer des réglages correspondants dans le dispositif côté commutation (LC) et le dispositif côté abonné (NT).
